# FASCICULE DE BREVET EUROPEEN

(11) **EP 4 311 783 B1**
(45) Date de publication et mention de la délivrance du brevet: **22.10.2025**
(21) Numéro de dépôt: 23186226.9
(22) Date de dépôt: 18.07.2023
(51) Int. Cl.: B64F 5/10

(54) **PLATEFORME D'ASSEMBLAGE DESTINÉE À MANIPULER AU MOINS UNE COQUE INFÉRIEURE D'AÉRONEF SANS LA DÉFORMER EN VUE D'UN ASSEMBLAGE D'UN CORPS DE FUSELAGE D'AÉRONEF**
MONTAGEPLATTFORM ZUR HANDHABUNG MINDESTENS EINER UNTERSCHALE EINES FLUGZEUGS OHNE VERFORMUNG ZUR MONTAGE EINES FLUGZEUGRUMPFKÖRPERS
ASSEMBLY PLATFORM FOR HANDLING AT LEAST ONE AIRCRAFT LOWER SHELL WITHOUT DEFORMING SAME FOR ASSEMBLY OF AN AIRCRAFT FUSELAGE BODY

(30) Priorité: 25.07.2022 FR 2207617
(43) Date de publication de la demande: 31.01.2024
(73) Titulaire: Airbus Operations SAS, 31060 Toulouse (FR)
(72) Inventeur: DATAS, Jean-Marc, 31060 TOULOUSE (FR); CARTEREAU, Thomas, 31060 TOULOUSE (FR); BOURIQUET, Jacques, 31060 TOULOUSE (FR); AQUILA, André, 31700 BLAGNAC (FR); DARBONVILLE, Nicolas, 31700 BLAGNAC (FR); AUTRET, Thomas, 31700 BLAGNAC (FR); BARBOULE, Joël, 31060 TOULOUSE (FR); BAYONNE, Sébastien, 31060 TOULOUSE (FR); GUERIN, Patrick, 31060 TOULOUSE (FR); VAN DER VEEN, Sjoerd, 31060 TOULOUSE (FR)
(74) Mandataire: Gevers & Orès

(56) Documents cités:
- EP-A1- 2 965 836
- EP-A1- 2 979 810
- WO-A1-2018/227298
- CN-B- 102 001 451
- CN-B- 104 229 158
- FR-A1- 2 788 743
- US-A1- 2006 118 235
- US-A1- 2017 015 440
- US-A1- 2022 097 870

## Description

### Domaine technique

La présente invention concerne une plateforme d'assemblage destinée à manipuler au moins une coque inférieure d'aéronef en vue d'un assemblage d'un corps de fuselage, tout en maintenant la forme de la coque inférieure.

### État de la technique

Un corps de fuselage (« fuselage barrel » en anglais) d'un aéronef comprend généralement plusieurs éléments, en particulier, une grille de plancher de cabine (« cabin floor grid » en anglais) de l'aéronef, une coque inférieure (« lower shell » en anglais), deux coques latérales (« side shells » en anglais) et une coque supérieure (« upper shell » en anglais). Ces éléments sont fabriqués indépendamment les uns des autres et les trous permettant leur assemblage entre eux sont percés avant leur assemblage. L'assemblage de ces éléments demande donc de mettre en œuvre des techniques d'assemblage de trou-à-trou (« hole-to-hole assembly » en anglais) et/ou d'assemblage de partie-à-partie (« part-to-part assembly » en anglais) afin de s'assurer qu'ils soient bien alignés pendant l'assemblage. Les documents US 2022/097870 A1, CN 102 001 451 B, CN 104 229 158 B et EP 2 979 810 A1 décrivent des systèmes d'installation pour assembler un fuselage.

En ce qui concerne la coque inférieure, la forme de celle-ci doit être conservée pendant l'assemblage. En effet, la coque inférieure peut se déformer pendant l'assemblage. Par exemple, elle peut vriller. Cela peut être un inconvénient pendant l'assemblage de corps de fuselage.

### Exposé de l'invention

La présente invention a pour objet de remédier à cet inconvénient. Pour cela, elle concerne une plateforme d'assemblage destinée à manipuler au moins une coque inférieure d'un aéronef en vue d'un assemblage d'un corps de fuselage de l'aéronef.

Selon l'invention, la plateforme d'assemblage comprend au moins :
- un châssis rectangulaire présentant un axe longitudinal et quatre coins,
- au moins deux cadres présentant un axe longitudinal, les au moins deux cadre présentant une assiette ajustable par rapport au châssis rectangulaire,
- au moins deux systèmes de réglage associé à un cadre, les au moins deux systèmes de réglage étant destinés à ajuster l'assiette du cadre auquel il est associé par rapport au châssis rectangulaire,
- au moins deux berceaux, chacun des au moins deux berceaux étant fixé sur un cadre, les au moins deux berceaux présentant une droite génératrice parallèle à l'axe longitudinal du cadre sur lequel il est fixé, les au moins deux berceaux présentant chacun au moins une surface de réception destinée à recevoir la coque inférieure et à maintenir la coque inférieure dans une forme souhaitée, chacun des deux cadres comprenant un bras d'alignement s'étendant parallèlement à l'axe longitudinal de chacun des deux cadres, le bras d'alignement de chacun des deux cadres comportant une extrémité libre comprenant un pion de centrage, le pion de centrage du bras d'alignement étant destiné à recevoir un élément de positionnement de la coque inférieure.

Selon une particularité, la ou les surfaces de réception de chacun des au moins deux berceaux comportent une pluralité de tampons rigides destinés à servir d'appui de la coque inférieure sur chacun des au moins deux berceaux, la pluralité des tampons rigides étant configurés pour que la coque inférieure soit maintenue à la forme souhaitée lorsque la coque inférieure s'appuie sur la pluralité des tampons rigides.

Selon une autre particularité, la ou les surfaces de réception comportent chacune au moins un dispositif de fixation destiné à fixer la coque inférieure aux deux berceaux.

Par ailleurs, le ou les dispositifs de fixation du ou des surfaces de réception correspondent chacun à une ventouse fixée sur la ou les surface de réception.

De plus, chacun des au moins deux berceaux comporte au moins une première structure de support comprenant une première zone de réception d'un premier côté latéral de berceau et au moins une deuxième structure de support formant comprenant une deuxième zone de réception d'un deuxième côté latéral de berceau, la première zone de réception et la deuxième zone de réception de chacun des au moins deux berceaux formant une surface de réception,
la ou les premières structures de support et la ou les deuxièmes structures de support de chacun des au moins deux berceaux étant montées rotatives autour d'un axe de rotation parallèle à l'axe longitudinal du cadre,
chacun des au moins deux berceaux comportant au moins un premier dispositif amortisseur associé chacun à une première structure de support et au moins un deuxième dispositif amortisseur associé chacun à une deuxième structure de support,
le ou les premiers dispositifs amortisseurs étant configurés pour amener la ou les premières structures de support associées à une position nominale autour de l'axe de rotation parallèle à l'axe longitudinal du cadre sur lequel le berceau est fixé, le ou les deuxièmes dispositifs amortisseurs étant configurés pour amener la ou les deuxièmes structures de support associées à une position nominale autour de l'axe de rotation parallèle à l'axe longitudinal du cadre sur lequel le berceau est fixé.

En outre, la première zone de réception de la ou des premières structures de support de chacun des au moins deux berceaux comporte un premier arceau coulissant et la deuxième zone de réception de la ou des deuxièmes structures de support de chacun des au moins deux berceaux comporte un deuxième arceau coulissant,
le premier arceau coulissant présentant un premier axe longitudinal courbe entre deux extrémités longitudinales du premier arceau coulissant, le premier axe longitudinal courbe étant conforme à la première zone de réception, le deuxième arceau coulissant présentant un deuxième axe longitudinal courbe entre deux extrémités longitudinales du deuxième arceau coulissant, le deuxième axe longitudinal courbe étant conforme à la deuxième zone de réception,
le premier arceau coulissant étant configuré pour coulisser suivant le premier axe longitudinal courbe dans une première glissière courbe de la ou des premières structures de support de chacun des au moins deux berceaux, le deuxième arceau coulissant étant configuré pour coulisser suivant le deuxième axe longitudinal courbe dans une deuxième glissière courbe de la ou des deuxièmes structures de support de chacun des au moins deux berceaux,
la première glissière courbe comportant un élément ressort à chaque extrémité longitudinal du premier arceau coulissant pour amener le premier arceau coulissant dans une position nominale, la deuxième glissière courbe comportant un élément ressort à chaque extrémité longitudinal du deuxième arceau coulissant pour amener le deuxième arceau coulissant dans une position nominale.

En outre, chacun des au moins deux systèmes de réglage comporte deux dispositifs de réglage, les deux dispositifs de réglage étant fixés au cadre auquel le système de réglage est associé de part et d'autre de l'axe longitudinal du cadre au droit du berceau, les deux dispositifs de réglage étant également fixés au châssis rectangulaire, chacun des deux dispositifs de réglage des au moins deux systèmes de réglage étant configuré pour ajuster une distance entre le châssis rectangulaire et le cadre.

Par ailleurs, la plateforme d'assemblage comporte quatre mâts d'alignement comprenant chacun un sommet agencé pour recevoir un dispositif référentiel de positionnement de coque latérale d'aéronef, un mât d'alignement étant fixé à chacun des quatre coins et perpendiculairement au châssis rectangulaire.

Dans une variante de réalisation, la plateforme d'assemblage comporte en outre au moins deux mâts de support comprenant chacun un sommet agencé pour recevoir un dispositif de positionnement des coques latérales, chacun des deux mâts de support étant fixé perpendiculairement au châssis rectangulaire entre deux mâts d'alignement sur un bord longitudinal du châssis rectangulaire.

De plus, chacun des au moins deux mâts de support présente une extrémité opposée au sommet montée rotative autour d'un axe perpendiculaire à l'axe longitudinal du châssis rectangulaire de façon que chacun des au moins deux mâts de support se présente alternativement dans une position escamotée dans laquelle chacun des au moins deux mâts de support est sensiblement parallèle au châssis rectangulaire et dans une position déployée dans laquelle chacun des au moins deux mâts de support est sensiblement perpendiculaire au châssis rectangulaire.

Par ailleurs, la plateforme d'assemblage comprend en outre un dispositif d'équilibrage de la plateforme d'assemblage destiné à maintenir sensiblement horizontal le châssis rectangulaire, le dispositif d'équilibrage comportant des pieds ajustables sur lesquels est fixé le châssis rectangulaire, les pieds ajustables étant ajustables verticalement en hauteur, les pieds ajustables étant destinés à être posés au sol, les pieds ajustables étant disposés aux quatre coins du châssis rectangulaire.

Par ailleurs, le châssis rectangulaire comprend au moins un logement destiné à recevoir une fourche de manutention parallèlement au châssis rectangulaire en vue de déplacer la plateforme d'assemblage d'un endroit à un autre.

### Brève description des figures

Les figures annexées feront bien comprendre comment l'invention peut être réalisée. Sur ces figures, des références identiques désignent des éléments semblables.
La figure 1 représente une vue en perspective d'une plateforme d'assemblage selon un mode de réalisation.
La figure 2 représente une vue en perspective d'une plateforme d'assemblage recevant une coque inférieure d'un corps de fuselage d'un aéronef.
La figure 3 représente une vue en perspective d'un détail d'un berceau d'une plateforme d'assemblage.
La figure 4 représente une vue en perspective d'un bras d'alignement d'une plateforme d'assemblage.
La figure 5 représente une vue de face d'un bord longitudinal d'une plateforme d'assemblage.
La figure 6 représente une vue de dessus d'un berceau d'une plateforme d'assemblage.
La figure 7 représente une vue schématique de profil d'un aéronef comprenant un corps de fuselage.
La figure 8 représente une vue schématique de profil d'un détail de la plateforme d'assemblage comprenant un dispositif à vérin.

### Description détaillée

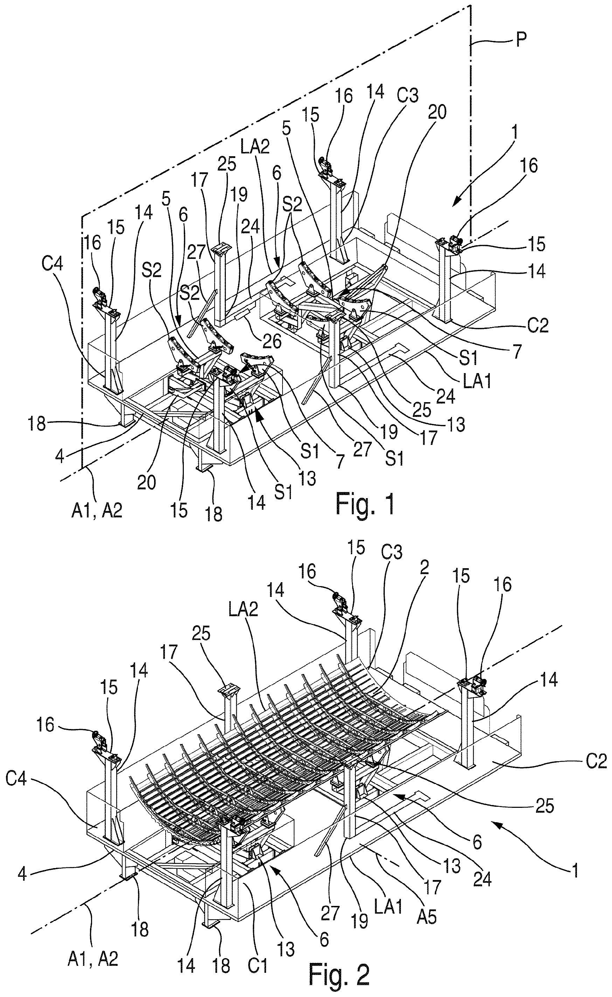

La plateforme d'assemblage 1 est représentée sur la figure 1 et sur la figure 2. La plateforme d'assemblage 1 est destinée à manipuler au moins une coque inférieure 2 d'un aéronef AC en vue d'un assemblage d'un corps de fuselage 3 de l'aéronef AC.

Dans la description, on appelle « plan de symétrie central » d'un objet un plan qui coupe l'objet en deux parties égales dans une direction longitudinale de l'objet. L'adjectif « latéral » qualifie une partie qui se situe d'un côté ou/et de l'autre du plan de symétrie central sans couper le plan de symétrie central.

On appelle « extrémités longitudinales » d'un objet les extrémités longitudinalement opposées de l'objet.

L'adjectif « vertical » et l'adverbe « verticalement » font référence à la direction de la pesanteur. L'adjectif « horizontal » et l'adverbe « horizontalement » font référence à une direction perpendiculaire à la direction de la pesanteur.

De plus, les adjectifs « supérieur » et « inférieur » sont définis par rapport au sol sur lequel le système de transport 1 est susceptible d'être déplacé. Un objet qualifié par l'adjectif « inférieur » se situe plus proche du sol qu'un objet qualifié par l'adjectif « supérieur ».

La plateforme d'assemblage 1 comprend au moins un châssis rectangulaire 4 présentant un axe longitudinal A1 et quatre coins C1, C2, C3, C4.

La plateforme d'assemblage 1 comprend également au moins deux cadres 5 présentant une assiette ajustable par rapport au châssis rectangulaire 4.

Dans la suite de la description, on omet d'utiliser l'expression « au moins deux cadres » dans la suite de la description, mais on comprend que la plateforme d'assemblage 1 peut aussi comprendre plus de deux cadres 5.

Chacun des deux cadres 5 comprend un axe longitudinal A2.

La plateforme d'assemblage P comprend en outre au moins deux berceaux 6. Dans le mode de réalisation représentée sur la figure 1, la plateforme d'assemblage 1 comprend deux berceaux 6.

Dans la suite de la description, on omet d'utiliser l'expression « au moins deux berceaux » mais on comprend que la plateforme d'assemblage 1 peut aussi comprendre plus de deux berceaux 6.

Chacun des deux berceaux 6 est fixé sur un cadre 5.

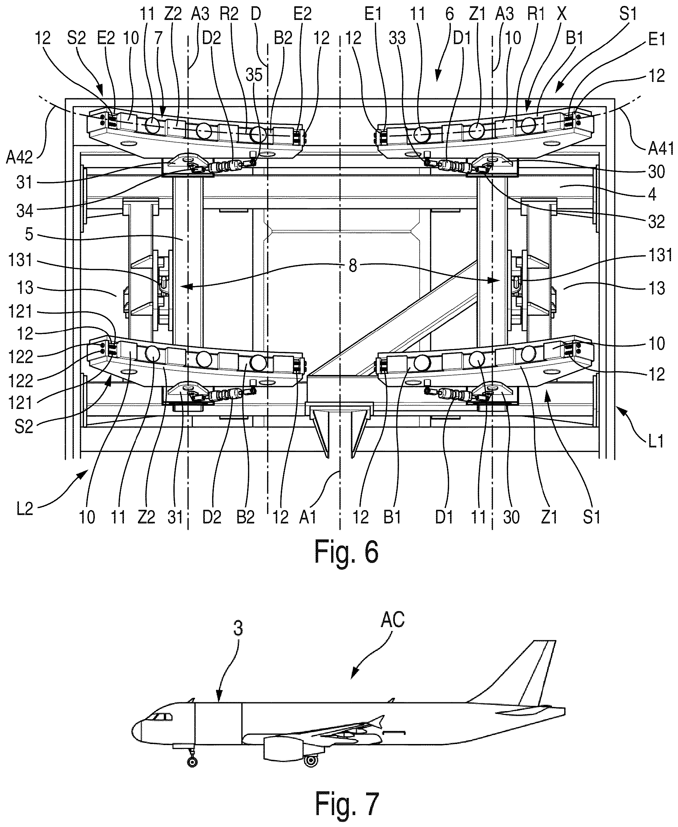

La plateforme d'assemblage comprend aussi au moins deux systèmes de réglage 8 associé chacun à un cadre 5 (figure 6). Autrement dit, chaque système de réglage 8 est associé à un cadre 5 différent.

Dans la suite de la description, on omet d'utiliser l'expression « au moins deux systèmes de réglage » dans la suite de la description, mais on comprend que la plateforme d'assemblage 1 peut aussi comprendre plus de deux systèmes de réglage 8.

Chacun des deux systèmes de réglage 8 est destiné à ajuster l'assiette du cadre 5 auquel il est associé par rapport au châssis rectangulaire 4.

Selon un mode de réalisation, chacun des deux systèmes de réglage 8 comporte deux dispositifs de réglage 13. Les deux dispositifs de réglage 13 sont fixés au cadre 5 auquel le système de réglage 8 est associé. Les deux dispositifs de réglage 13 d'un système de réglage 8 sont disposés de part et d'autre de l'axe longitudinal A2 du cadre 5 au droit du berceau 6. Les deux dispositifs de réglage 13 sont également fixés au châssis rectangulaire 4. Chacun des deux dispositifs de réglage 13 des deux systèmes de réglage 8 est configuré pour ajuster une distance entre le châssis rectangulaire 4 et le cadre 5.

Par exemple, chacun des deux dispositifs de réglage 13 comprend un vérin hydraulique 131. Le vérin hydraulique 131 de chacun des deux dispositifs de réglage 13 présente une première extrémité fixée au châssis rectangulaire et une deuxième extrémité fixée au cadre 5. Par exemple, la deuxième extrémité est fixée à un bord latéral du cadre 5. Ainsi, un vérin hydraulique 131 est apte à ajuster une distance entre un bord latéral de cadre 5 et le châssis rectangulaire 4.

Chacun des deux berceaux 6 présente une surface en berceau ayant une droite génératrice D parallèle à l'axe longitudinal A2 du cadre 5 sur lequel il est fixé. Une droite génératrice d'une surface en berceau correspond à une droite qui se déplace parallèle à elle-même dans l'espace le long d'une courbe (la courbe définissant la courbure de la surface en berceau), selon une direction constante. Une droite génératrice D correspond à cette droite à un endroit quelconque le long de la courbe de la surface en berceau.

Par ailleurs, les deux berceaux 6 présentent un plan de symétrie central (selon un axe parallèle à la droite génératrice D) qui est sensiblement confondu avec un plan de symétrie central P de la plateforme d'assemblage.

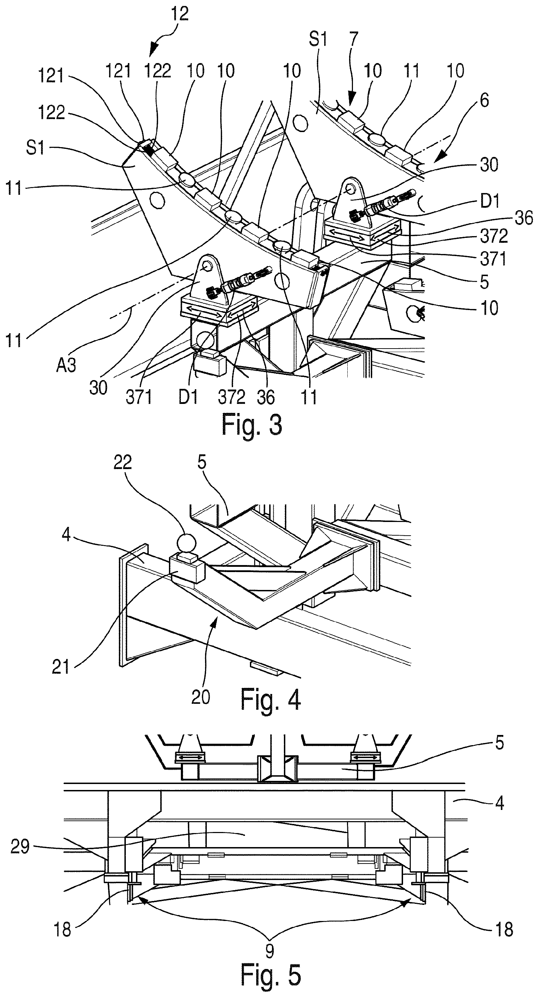

Les deux berceaux 6 présentent chacun au moins une surface de réception 7 correspondant à la surface en berceau destinée à recevoir la coque inférieure 2 et à maintenir la coque inférieure 2 dans une forme de coque inférieure 2 souhaitée. La ou les surfaces de réception 7 de chacun des deux berceaux 6 peut comporter une pluralité de tampons rigides 10 destinés à servir d'appui de la coque inférieure 2 sur chacun des deux berceaux 6 (figure 3). La pluralité des tampons rigides 10 sont configurés pour que la coque inférieure 2 soit maintenue à la forme souhaitée lorsque la coque inférieure 2 s'appuie sur la pluralité des tampons rigides 10. La pluralité des tampons rigides 10 détermine la forme souhaitée de la coque inférieure 2. Les tampons 10 de la pluralité des tampons 10 sont ajustables en position avant la première réception de la coque inférieure 2. Une vérification périodique de la pluralité des tampons 10 peut être effectuée. Par exemple, la vérification peut être effectuée un nombre prédéterminé de fois par année ou après un nombre prédéterminé d'aéronefs AC assemblés.

Le ou les surfaces de réception 7 peuvent comporter chacune au moins un dispositif de fixation 11 destiné à fixer la coque inférieure 2 aux deux berceaux 6. Lorsque l'on dit que le ou les dispositifs de fixation 11 sont destinés à fixer la coque inférieure 2 au deux berceaux 6, on veut dire que le ou les dispositifs de fixation 11 maintiennent la coque inférieure 2 sur les deux berceaux 6 sans qu'il n'y ait de mouvement relatif entre la coque inférieure 2 et la surface de réception 7 des deux berceaux 6.

Avantageusement, le ou les dispositifs de fixation 11 du ou des surfaces de réception 7 correspondent chacun à une ventouse fixée sur la ou les surface de réception 7 (figure 3).

Par ailleurs, chacun des deux berceaux 6 comporte au moins une première structure de support S1 comprenant une première zone de réception Z1 d'un premier côté latéral L1 de berceau 6 et au moins une deuxième structure de support S2 comprenant une deuxième zone de réception Z2 d'un deuxième côté latéral L2 de berceau 6. La première zone de réception Z1 et la deuxième zone de réception Z2 de chacun des deux berceaux 6 forment ensemble une surface de réception 7. La ou les premières structures de support S1 est symétrique à la ou aux deuxièmes structures de support S2 par rapport à un plan de symétrie central P de la plateforme d'assemblage 1.

Comme illustré sur la figure 1 et la figure 6, dans un mode de réalisation, chacun des berceaux 6 comporte deux premières structures de support S1 et deux deuxièmes structures de support S2.

La ou les premières structures de support S1 et la ou les deuxièmes structures de support S2 de chacun des deux berceaux 6 sont montées rotatives par rapport au cadre 5 autour d'un axe de rotation A3 parallèle à l'axe longitudinal A2 du cadre 5 (figure 4).

Chacun des deux berceaux 6 peut comprendre au moins un premier élément de fixation en U 30 fixé sur le cadre 5 et au moins un deuxième élément de fixation en U 31 fixé sur le cadre 5. Le ou les premiers éléments de fixation en U 30 et le ou les deuxièmes éléments de fixation en U 31 comprennent chacun deux jambes parallèles supportant un axe de rotation confondu avec à l'axe de rotation A3.

Le ou chacun des premiers éléments de fixation en U 30 est associé à une première structure de support S1. Le ou chacun des deuxièmes éléments de fixation en U 31 est associé à une deuxième structure de support S2.

La ou chacune des premières structures de support S1 de chacun des deux berceaux 6 est montée rotative entre les deux jambes d'un premier élément de fixation en U 30. La ou chacune des deuxièmes structures de support S2 de chacun des deux berceaux 6 est montée rotative entre les deux jambes d'un deuxième élément de fixation en U 31.

Dans un mode de réalisation, chacun des premiers éléments de fixation en U 30 et chacun des deuxièmes éléments de fixation en U 31 comprennent une pièce de déplacement 36. Cette pièce de déplacement 36 autorise chacun des premiers éléments de fixation en U 30 et chacun des deuxièmes éléments de fixation en U 31 de se mouvoir selon un mouvement de translation 371 perpendiculaire à l'axe de rotation A3 et un mouvement de translation 372 parallèle à l'axe de rotation A3. Sur la figure 3, le mouvement de translation 371 et le mouvement de translation 372 sont représentés par une double flèche. La pièce de déplacement 36 peut correspondre à une plaque à roulement à bille.

Chacun des deux berceaux 6 comporte au moins un premier dispositif amortisseur D1 et au moins un deuxième dispositif amortisseur D2. Le ou chacun des premiers dispositifs amortisseurs D1 est associé à une première structure de support S1. Le ou chacun des deuxièmes dispositifs amortisseurs D2 est associé à une deuxième structure de support S2.

Le ou les premiers dispositifs amortisseurs D1 sont configurés pour amener la ou les premières structures de support S1 associées à une position nominale autour de l'axe de rotation A3 parallèle à l'axe longitudinal A2 du cadre 5 sur lequel le berceau 6 est fixé. De même, le ou les deuxièmes dispositifs amortisseurs D2 sont configurés pour amener la ou les deuxièmes structures de support S2 associées à une position nominale autour de l'axe de rotation A3 parallèle à l'axe longitudinal A2 du cadre 5 sur lequel le berceau 6 est fixé. La position nominale des structures de support S1 et S2 correspond à une position dans laquelle les structures de support S1 et S2 ne sont pas sollicitées par une force, en particulier quand la coque inférieure 2 n'est pas reçue sur les berceaux 6.

Dans un mode de réalisation (figure 6), le ou chacun des premiers dispositifs amortisseurs D1 comprend une première extrémité 32 fixée à un premier élément de fixation en U 30 et une deuxième extrémité 33 fixée à la première structure de support S1 associée. Le ou chacun des deuxièmes dispositifs amortisseurs D2 comprend une première extrémité 34 fixée à un deuxième élément de fixation en U 31 et une deuxième extrémité 35 fixée à la deuxième structure de support S2 associée.

La première zone de réception Z1 de la ou des premières structures de support S1 de chacun des deux berceaux 6 peut comporter un premier arceau coulissant B1. De même, la deuxième zone de réception Z2 de la ou des deuxièmes structures de support S2 de chacun des deux berceaux 6 peut comporter un deuxième arceau coulissant B2.

Le premier arceau coulissant B1 présente un premier axe longitudinal courbe A41 entre ses deux extrémités longitudinales E1. Le premier axe longitudinal courbe A41 est conforme à la première zone de réception Z1. De même, le deuxième arceau coulissant B2 présente un deuxième axe longitudinal courbe A42 entre ses deux extrémités longitudinales E2. Le deuxième axe longitudinal courbe A42 est conforme à la deuxième zone de réception Z2.

Le premier arceau coulissant B1 est configuré pour coulisser suivant le premier axe longitudinal courbe A41 dans une première glissière courbe R1 de la ou des premières structures de support S1 de chacun des deux berceaux 6. De même, le deuxième arceau coulissant B2 est configuré pour coulisser suivant le deuxième axe longitudinal courbe A42 dans une deuxième glissière courbe R2 de la ou des deuxièmes structures de support S2 de chacun des deux berceaux 6.

Une glissière correspond à une rainure pratiquée dans les structures de support S1 et S2 pour faire glisser les arceaux coulissant B1 et B2.

La première glissière courbe R1 de la ou des premières structures de support S1 de chacun des deux berceaux 6 présente un axe longitudinal parallèle au premier axe longitudinal courbe A41. La deuxième glissière courbe R2 de la ou des deuxièmes structures de support S2 de chacun des deux berceaux 6 présente un axe longitudinal parallèle au deuxième axe longitudinal courbe A42.

La première glissière courbe R1 comporte un élément ressort 12 à chaque extrémité longitudinal E1 du premier arceau coulissant B1. L'élément ressort 12 de chaque extrémité du premier arceau coulissant B1 exerce une force parallèle au premier axe longitudinal courbe A41 pour amener le premier arceau coulissant B1 dans une position nominale. De même, la deuxième glissière courbe R2 comporte un élément ressort 12 à chaque extrémité longitudinal E2 du deuxième arceau coulissant B2. L'élément ressort 12 de chaque extrémité du deuxième arceau coulissant B2 exerce une force parallèle au deuxième axe longitudinal courbe A42 pour amener le deuxième arceau coulissant B2 dans une position nominale. La position nominale des arceaux coulissants B1 et B2 correspond à une position dans laquelle les arceaux coulissants B1 et B2 ne sont pas sollicités par une force, en particulier quand la coque inférieure 2 n'est pas reçue sur les berceaux 6.

Sur le mode de réalisation illustrée sur la figure 6, l'élément ressort 12 des extrémités du ou des premiers arceaux coulissants B1 et des extrémités du ou des deuxièmes arceaux coulissants B2 comprend deux ressorts hélicoïdaux 121 présentant un axe longitudinal parallèle au premier axe longitudinal courbe A41 et au deuxième axe longitudinal courbe A42, respectivement. L'élément ressort 12 peut également comprendre une tige de guidage par ressort hélicoïdal 121. La tige de guidage présente un axe longitudinal parallèle au premier axe longitudinal courbe A41 et au deuxième axe longitudinal courbe A42, respectivement. Une tige de guidage peut être vissée par un élément de vissage 122 à chacune des extrémités E1, E2 des glissières R1 et R2. Le ou les dispositifs de fixation 11 (par exemple les ventouses) et/ou la pluralité des tampons rigides 10 sont fixés sur le premier arceau coulissant B1 et le deuxième arceau coulissant B2.

Par ailleurs, la plateforme d'assemblage 1 comporte quatre mâts d'alignement 14 comprenant chacun un sommet 15 agencé pour recevoir un dispositif référentiel de positionnement 16 de coque latérale d'aéronef AC. Un mât d'alignement 14 est fixé à chacun des quatre coins C1, C2, C3, C4. Chacun des mâts d'alignement 14 présente un axe longitudinal perpendiculaire au châssis rectangulaire 4.

Par exemple, le dispositif référentiel de positionnement 16 correspond à un dispositif destiné à positionner l'un par rapport à l'autre au moins une grille de plancher de cabine (non représentée) et deux coques latérales (non représentées) d'un aéronef AC en vue d'un assemblage d'un corps de fuselage 3 de l'aéronef AC.

Avantageusement, la plateforme d'assemblage 1 peut comporter en outre au moins deux mâts de support 17 comprenant chacun un sommet 25 agencé pour recevoir un dispositif de fixation auquel sont fixées les coques latérales. Chacun des deux mâts de support 17 est fixé perpendiculairement au châssis rectangulaire 4 entre deux mâts d'alignement 14 sur un bord longitudinal LA1, LA2 du châssis rectangulaire 4.

La présence ou l'absence des mâts de support 17 peut dépendre de la longueur du corps de fuselage 3 à assembler. En effet, la présence des mâts de support 17 peut être nécessaire si la longueur du corps de fuselage 3 à assembler présente une longueur pouvant entraîner un cintrage de la grille de plancher de cabine et/ou des deux coques latérales entre les mâts d'alignement 14 sous leur propre masse.

De plus, chacun des au moins deux mâts de support 17 présente une extrémité 19 opposée au sommet 25 montée rotative autour d'un axe A5 perpendiculaire à l'axe longitudinal A1 du châssis rectangulaire 4 de façon que chacun des au moins deux mâts de support 17 se présente alternativement dans une position escamotée et une position déployée. Dans la position escamotée, chacun des au moins deux mâts de support 17 est sensiblement parallèle au châssis rectangulaire 4. Dans la position déployée, chacun des au moins deux mâts de support 17 est sensiblement perpendiculaire au châssis rectangulaire 4. Sur la figure 1 et la figure 2, les mâts de support 17 se trouvent dans la position déployée.

Comme représenté sur la figure 1 et la figure 2, le châssis rectangulaire 4 peut également comprendre au moins deux logements 24. Chacun des deux logements 24 est destiné à loger un mât de support 17 lorsque ce mât de support 17 est dans la position escamotée.

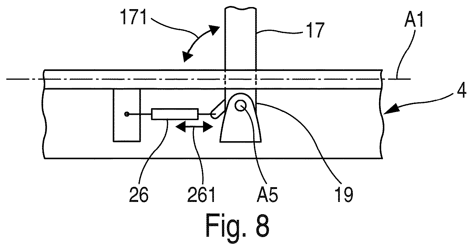

Comme représenté sur la figure 1 et la figure 8, chacun des au moins deux mâts de support 17 peut en outre comprendre un dispositif à vérin 26. Le dispositif à vérin 26 est configuré pour entraîner le mât de support 17 de la position escamotée à la position déployée et vice-versa autour de l'axe A5 perpendiculaire à l'axe longitudinal A1 du châssis rectangulaire 4. Par exemple, le dispositif à vérin 26 est fixé à l'extrémité 19. Sur la figure 1, un dispositif à vérin 26 est représenté par transparence sous le châssis rectangulaire 4. Pour des soucis de clarté de la figure 1, seul un dispositif à vérin 6 est représenté.

Sur la figure 8, le mouvement d'entraînement en translation 261 (représenté par une double flèche 261 sur la figure 8) généré par le dispositif à vérin 26 amène un mouvement de rotation 171 (représenté par une double flèche 171) du mât de support 17 autour de l'axe A5 au niveau de l'extrémité 19.

En outre, comme représenté sur la figure 1 et la figure 2, chacun des mâts de support 17 peut comprendre une béquille 27 configurée pour maintenir chacun des mâts de support 17 dans une position sensiblement perpendiculaire au châssis rectangulaire 4. La béquille 27 de chacun des mâts de support 17 comprend une extrémité fixée au châssis rectangulaire 4 et une extrémité fixée au mât de support 17 entre l'extrémité 19 et le sommet 25.

En outre, la plateforme d'assemblage 1 peut comprendre un dispositif d'équilibrage 9 de la plateforme d'assemblage 1 (figure 5). Le dispositif d'équilibrage 9 est destiné à maintenir sensiblement horizontal le châssis rectangulaire 4. Le dispositif d'équilibrage 9 peut comporter des pieds ajustables 18 sur lesquels est fixé le châssis rectangulaire 4. Les pieds ajustables 18 sont ajustables verticalement en hauteur. Les pieds ajustables 18 sont destinés à être posés au sol. Les pieds ajustables 18 sont disposés aux quatre coins C1, C2, C3, C4 du châssis rectangulaire 4.

Chacun des pieds ajustables 18 peut comprendre un vérin permettant d'ajuster leur hauteur. Par exemple, le vérin de chacun des pieds ajustables 18 peut correspondre à un vérin hydraulique qui peut être commandé à distance.

Chacun des pieds ajustables 18 peut également correspondre à un pied ajustable par vissage ou dévissage. Par exemple, le dévissage permet d'augmenter la hauteur du pied ajustable 18 et le vissage permet de diminuer la hauteur du pied ajustable 18.

Chacun des deux cadres 5 comprend un pion de centrage 22. Le pion de centrage 22 de chacun des deux cadres 5 est destiné à recevoir un élément de positionnement de la coque inférieure 2. Ce pion de centrage 22 permet de placer la coque inférieure 2 sur la plateforme d'assemblage 1 de façon que l'axe longitudinal de la coque inférieure 2 soit sensiblement parallèle à l'axe longitudinal A1 du châssis rectangulaire 4.

Selon l'invention revendiquée, chacun des deux cadres 5 comprend un bras d'alignement 20 s'étendant parallèlement à l'axe longitudinal A2 de chacun des deux cadres 5. Le bras d'alignement 20 comporte une extrémité libre 21 comprenant un pion de centrage 22 (figure 4).

Ce pion de centrage 22 est destiné à recevoir un élément de positionnement de la coque inférieure 2. Cet élément de positionnement de la coque inférieure 2 peut correspondre à un élément présentant une forme complémentaire à la forme du pion de centrage 22. Ce pion de centrage 22 permet de placer la coque inférieure 2 sur la plateforme d'assemblage 1 de façon que l'axe longitudinal de la coque inférieure 2 soit sensiblement parallèle à l'axe longitudinal A1 du châssis rectangulaire 4.

Par exemple, le pion de centrage 22 d'un des deux cadres 5 et le pion de centrage 22 de l'autre des deux cadres 5 sont alignés selon une ligne parallèle à l'axe longitudinal A1 du châssis rectangulaire 4.

Selon un mode de réalisation (figure 5), le châssis rectangulaire 4 peut comprendre au moins un logement 23 destiné à recevoir une fourche de manutention parallèlement au châssis rectangulaire 4 en vue de déplacer la plateforme d'assemblage 1 d'un endroit à un autre.

Selon un autre mode de réalisation, la plateforme d'assemblage peut comprendre des roues (non représentées) montées sous le châssis rectangulaire 4 en vue de déplacer la plateforme d'assemblage 1 d'un endroit à un autre. Ces roues peuvent être rétractables.

## Revendications

1. Plateforme d'assemblage (1) destinée à manipuler au moins une coque inférieure (2) d'un aéronef (AC) en vue d'un assemblage d'un corps de fuselage (3) de l'aéronef (AC),
la plateforme d'assemblage (1) comprenant au moins :
- un châssis rectangulaire (4) présentant un axe longitudinal (A1) et quatre coins (C1, C2, C3, C4),
- au moins deux cadres (5) présentant un axe longitudinal (A2), les au moins deux cadre (5) présentant une assiette ajustable par rapport au châssis rectangulaire (4),
- au moins deux systèmes de réglage (8) associé à un cadre (5), les au moins deux systèmes de réglage (8) étant destinés à ajuster l'assiette du cadre (5) auquel il est associé par rapport au châssis rectangulaire (4),
- au moins deux berceaux (6), chacun des au moins deux berceaux (6) étant fixé sur un cadre (5), les au moins deux berceaux (6) présentant une droite génératrice (D) parallèle à l'axe longitudinal (A2) du cadre (5) sur lequel il est fixé, les au moins deux berceaux (6) présentant chacun au moins une surface de réception (7) destinée à recevoir la coque inférieure (2) et à maintenir la coque inférieure (2) dans une forme souhaitée ;.
**caractérisée en ce que** chacun des deux cadres (5) comprend un bras d'alignement (20) s'étendant parallèlement à l'axe longitudinal (A2) de chacun des deux cadres (5), le bras d'alignement (20) de chacun des deux cadres (5) comportant une extrémité libre (21) comprenant un pion de centrage (22), le pion de centrage (22) du bras d'alignement (20) étant destiné à recevoir un élément de positionnement de la coque inférieure (2).

2. Plateforme selon la revendication 1,
**caractérisée en ce que** la ou les surfaces de réception (7) de chacun des au moins deux berceaux (6) comportent une pluralité de tampons rigides (10) destinés à servir d'appui de la coque inférieure (2) sur chacun des au moins deux berceaux (6), la pluralité des tampons rigides (10) étant configurés pour que la coque inférieure (2) soit maintenue à la forme souhaitée lorsque la coque inférieure (2) s'appuie sur la pluralité des tampons rigides (10).

3. Plateforme selon l'une quelconque des revendications 1 et 2,
**caractérisée en ce que** le ou les surfaces de réception (7) comportent chacune au moins un dispositif de fixation (11) destiné à fixer la coque inférieure (2) aux deux berceaux (6).

4. Plateforme selon la revendication 3,
**caractérisée en ce que** le ou les dispositifs de fixation (11) du ou des surfaces de réception (7) correspondent chacun à une ventouse fixée sur la ou les surface de réception (7).

5. Plateforme selon l'une quelconque des revendications 1 à 4,
**caractérisée en ce que** chacun des au moins deux berceaux (6) comporte au moins une première structure de support (S1) comprenant une première zone de réception (Z1) d'un premier côté latéral (L1) de berceau (6) et au moins une deuxième structure de support (S2) formant comprenant une deuxième zone de réception (Z2) d'un deuxième côté latéral (L2) de berceau (6), la première zone de réception (Z1) et la deuxième zone de réception (Z2) de chacun des au moins deux berceaux (6) formant une surface de réception (7),
la ou les premières structures de support (S1) et la ou les deuxièmes structures de support (S2) de chacun des au moins deux berceaux (6) étant montées rotatives autour d'un axe de rotation (A3) parallèle à l'axe longitudinal (A2) du cadre (5),
chacun des au moins deux berceaux (6) comportant au moins un premier dispositif amortisseur (D1) associé chacun à une première structure de support (S1) et au moins un deuxième dispositif amortisseur (D2) associé chacun à une deuxième structure de support (S2),
le ou les premiers dispositifs amortisseurs (D1) étant configurés pour amener la ou les premières structures de support (S1) associées à une position nominale autour de l'axe de rotation (A3) parallèle à l'axe longitudinal (A2) du cadre (5) sur lequel le berceau (6) est fixé, le ou les deuxièmes dispositifs amortisseurs (D2) étant configurés pour amener la ou les deuxièmes structures de support (S2) associées à une position nominale autour de l'axe de rotation (A3) parallèle à l'axe longitudinal (A2) du cadre (5) sur lequel le berceau (6) est fixé.

6. Plateforme selon la revendication 5,
**caractérisée en ce que** la première zone de réception (Z1) de la ou des premières structures de support (S1) de chacun des au moins deux berceaux (6) comporte un premier arceau coulissant (B1) et la deuxième zone de réception (Z2) de la ou des deuxièmes structures de support (S2) de chacun des au moins deux berceaux (6) comporte un deuxième arceau coulissant (B2),
le premier arceau coulissant (B1) présentant un premier axe longitudinal courbe (A41) entre deux extrémités longitudinales (E1) du premier arceau coulissant (B2), le premier axe longitudinal courbe (A41) étant conforme à la première zone de réception (Z1), le deuxième arceau coulissant (B2) présentant un deuxième axe longitudinal courbe (A42) entre deux extrémités longitudinales (E2) du deuxième arceau coulissant (B2), le deuxième axe longitudinal courbe (A42) étant conforme à la deuxième zone de réception (Z2),
le premier arceau coulissant (B2) étant configuré pour coulisser suivant le premier axe longitudinal courbe (A41) dans une première glissière courbe (R1) de la ou des premières structures de support (S1) de chacun des au moins deux berceaux (6), le deuxième arceau coulissant (B2) étant configuré pour coulisser suivant le deuxième axe longitudinal courbe (A42) dans une deuxième glissière courbe (R2) de la ou des deuxièmes structures de support (S2) de chacun des au moins deux berceaux (6),
la première glissière courbe (R1) comportant un élément ressort (12) à chaque extrémité longitudinal (E1) du premier arceau coulissant (B1) pour amener le premier arceau coulissant (B1) dans une position nominale, la deuxième glissière courbe (R2) comportant un élément ressort (12) à chaque extrémité longitudinal (E2) du deuxième arceau coulissant (B2) pour amener le deuxième arceau coulissant (B2) dans une position nominale.

7. Plateforme selon l'une quelconque des revendications 1 à 6,
**caractérisé en ce que** chacun des au moins deux systèmes de réglage (8) comporte deux dispositifs de réglage (13), les deux dispositifs de réglage (13) étant fixés au cadre (5) auquel le système de réglage (8) est associé de part et d'autre de l'axe longitudinal (A2) du cadre (5) au droit du berceau (6), les deux dispositifs de réglage (13) étant également fixés au châssis rectangulaire (4), chacun des deux dispositifs de réglage (13) des au moins deux systèmes de réglage (8) étant configuré pour ajuster une distance entre le châssis rectangulaire (4) et le cadre (5).

8. Plateforme selon l'une quelconque des revendications 1 à 6,
**caractérisée en ce qu'**elle comporte quatre mâts d'alignement (14) comprenant chacun un sommet (15) agencé pour recevoir un dispositif référentiel de positionnement (16) de coque latérale d'aéronef, un mât d'alignement (14) étant fixé à chacun des quatre coins (C1, C2, C3, C4) et perpendiculairement au châssis rectangulaire (4).

9. Plateforme selon l'une quelconque des revendications 1 à 8,
**caractérisée en ce qu'**elle comporte en outre au moins deux mâts de support (17) comprenant chacun un sommet (25) agencé pour recevoir un dispositif de positionnement des coques latérales, chacun des deux mâts de support (17) étant fixé perpendiculairement au châssis rectangulaire (4) entre deux mâts d'alignement (14) sur un bord longitudinal (LA1, LA2) du châssis rectangulaire (4).

10. Plateforme selon la revendication 8,
**caractérisée en ce que** chacun des au moins deux mâts de support (17) présente une extrémité (19) opposée au sommet (25) montée rotative autour d'un axe (A5) perpendiculaire à l'axe longitudinal (A1) du châssis rectangulaire (4) de façon que chacun des au moins deux mâts de support (17) se présente alternativement dans une position escamotée dans laquelle chacun des au moins deux mâts de support (17) est sensiblement parallèle au châssis rectangulaire (4) et dans une position déployée dans laquelle chacun des au moins deux mâts de support (17) est sensiblement perpendiculaire au châssis rectangulaire (4).

11. Plateforme selon l'une quelconque des revendications 1 à 9,
**caractérisée en ce qu'**elle comprend en outre un dispositif d'équilibrage (9) de la plateforme d'assemblage (1) destiné à maintenir sensiblement horizontal le châssis rectangulaire (4), le dispositif d'équilibrage (9) comportant des pieds ajustables (18) sur lesquels est fixé le châssis rectangulaire (4), les pieds ajustables (18) étant ajustables verticalement en hauteur, les pieds ajustables (18) étant destinés à être posés au sol, les pieds ajustables (18) étant disposés aux quatre coins (C1, C2, C3, C4) du châssis rectangulaire (4).

12. Plateforme selon l'une quelconque des revendications 1 à 11,
**caractérisée en ce que** le châssis rectangulaire (4) comprend au moins un logement (23) destiné à recevoir une fourche de manutention parallèlement au châssis rectangulaire (4) en vue de déplacer la plateforme d'assemblage (1) d'un endroit à un autre.

## Patentansprüche

1. Montageplattform (1), die dazu bestimmt ist, mindestens eine untere Schale (2) eines Luftfahrzeugs (AC) im Hinblick auf die Montage eines Rumpfkörpers (3) des Luftfahrzeugs (AC) zu handhaben,
wobei die Montageplattform (1) mindestens umfasst:
- ein rechteckiges Gestell (4), das eine Längsachse (A1) und vier Ecken (C1, C2, C3, C4) aufweist,
- mindestens zwei Rahmen (5), die eine Längsachse (A2) aufweisen, wobei die mindestens zwei Rahmen (5) eine in Bezug auf das rechteckige Gestell (4) einstellbare Trimmlage aufweisen,
- mindestens zwei Regulierungssysteme (8), die einem Rahmen (5) zugeordnet sind, wobei die mindestens zwei Regulierungssysteme (8) dazu bestimmt sind, die Trimmlage des Rahmens (5), dem sie zugeordnet sind, in Bezug auf das rechteckige Gestell (4) einzustellen,
- mindestens zwei Wiegen (6), wobei jede der mindestens zwei Wiegen (6) an einem Rahmen (5) befestigt ist, wobei die mindestens zwei Wiegen (6) eine zur Längsachse (A2) des Rahmens (5), an dem sie befestigt sind, parallele Mantellinie (D) aufweisen, wobei die mindestens zwei Wiegen (6) jeweils mindestens eine Aufnahmeoberfläche (7) aufweisen, die dazu bestimmt ist, die untere Schale (2) aufzunehmen und die untere Schale (2) in einer gewünschten Form zu halten;
**dadurch gekennzeichnet, dass** jeder der beiden Rahmen (5) einen Ausrichtungsarm (20) umfasst, der sich parallel zur Längsachse (A2) jedes der beiden Rahmen (5) erstreckt, wobei der Ausrichtungsarm (20) jedes der beiden Rahmen (5) ein freies Ende (21) umfasst, das einen Zentrierzapfen (22) umfasst, wobei der Zentrierzapfen (22) des Ausrichtungsarms (20) dazu bestimmt ist, ein Positionierungselement der unteren Schale (2) aufzunehmen.

2. Plattform nach Anspruch 1,
**dadurch gekennzeichnet, dass** die Aufnahmeoberfläche(n) (7) jeder der mindestens zwei Wiegen (6) eine Vielzahl von starren Stempeln (10) umfasst, die dazu bestimmt sind, als Auflage für die untere Schale (2) auf jeder der mindestens zwei Wiegen (6) zu dienen, wobei die Vielzahl der starren Stempel (10) dazu konfiguriert ist, die untere Schale (2) in der gewünschten Form zu halten, wenn die untere Schale (2) auf der Vielzahl der starren Stempel (10) aufliegt.

3. Plattform nach einem der Ansprüche 1 und 2,
**dadurch gekennzeichnet, dass** die Aufnahmeoberfläche(n) (7) jeweils mindestens eine Befestigungsvorrichtung (11) umfassen, die dazu bestimmt ist, die untere Schale (2) an den beiden Wiegen (6) zu befestigen.

4. Plattform nach Anspruch 3,
**dadurch gekennzeichnet, dass** die Befestigungsvorrichtung(en) (11) der Aufnahmeoberfläche(n) (7) jeweils einem Saugnapf entspricht, der an der/den Aufnahmeoberfläche(n) (7) befestigt ist.

5. Plattform nach einem der Ansprüche 1 bis 4,
**dadurch gekennzeichnet, dass** jede der mindestens zwei Wiegen (6) mindestens eine erste Trägerstruktur (S1) aufweist, die eine erste Aufnahmezone (Z1) einer ersten lateralen Seite (L1) der Wiege (6) umfasst, und mindestens eine zweite Trägerstruktur (S2), die eine zweite Aufnahmezone (Z2) einer zweiten lateralen Seite (L2) der Wiege (6) bildet, wobei die erste Aufnahmezone (Z1) und die zweite Aufnahmezone (Z2) jeder der mindestens zwei Wiegen (6) eine Aufnahmeoberfläche (7) bilden,
wobei die erste(n) Trägerstruktur(en) (S1) und die zweite(n) Trägerstruktur(en) (S2) jedes der mindestens zwei Wiegen (6) um eine zur Längsachse (A2) des Rahmens (5) parallele Drehachse (A3) drehbar gelagert sind, wobei jede der mindestens zwei Wiegen (6) mindestens eine erste Dämpfungsvorrichtung (D1), die jeweils einer ersten Trägerstruktur (S1) zugeordnet ist, und mindestens eine zweite Dämpfungsvorrichtung (D2) aufweist, die jeweils einer zweiten Trägerstruktur (S2) zugeordnet ist,
wobei die erste(n) Dämpfungsvorrichtung(en) (D1) dazu konfiguriert ist (sind), die zugeordnete(n) erste(n) Trägerstruktur(en) (S1) in eine Nennposition um die Drehachse (A3) parallel zur Längsachse (A2) des Rahmens (5) zu bringen, an dem die Wiege (6) befestigt ist, wobei die zweite(n) Dämpfungsvorrichtung(en) (D2) dazu konfiguriert ist (sind), die zugeordnete(n) zweite(n) Trägerstruktur(en) (S2) in eine Nennposition um die Drehachse (A3) parallel zur Längsachse (A2) des Rahmens (5) zu bringen, an dem die Wiege (6) befestigt ist.

6. Plattform nach Anspruch 5,
**dadurch gekennzeichnet, dass** die erste Aufnahmezone (Z1) der ersten Trägerstruktur(en) (S1) jedes der mindestens zwei Wiegen (6) einen ersten Gleitbügel (B1) aufweist und die zweite Aufnahmezone (Z2) der zweiten Trägerstruktur(en) (S2) jedes der mindestens zwei Wiegen (6) einen zweiten Gleitbügel (B2) aufweist,
wobei der erste Gleitbügel (B1) eine erste gekrümmte Längsachse (A41) zwischen zwei Längsenden (E1) des ersten Gleitbügels (B2) aufweist, wobei die erste gekrümmte Längsachse (A41) mit der ersten Aufnahmezone (Z1) übereinstimmt, wobei der zweite Gleitbügel (B2) eine zweite gekrümmte Längsachse (A42) zwischen zwei Längsenden (E2) des zweiten Gleitbügels (B2) aufweist, wobei die zweite gekrümmte Längsachse (A42) mit der zweiten Aufnahmezone (Z2) übereinstimmt,
wobei der erste Gleitbügel (B2) dazu konfiguriert ist, entlang der ersten gekrümmten Längsachse (A41) in einer ersten gekrümmten Gleitführung (R1) der ersten Trägerstruktur(en) (S1) jedes der mindestens zwei Wiegen (6) zu gleiten, wobei der zweite Gleitbügel (B2) dazu konfiguriert ist, entlang der zweiten gekrümmten Längsachse (A42) in einer zweiten gekrümmten Gleitführung (R2) der zweiten Trägerstruktur(en) (S2) jedes der mindestens zwei Wiegen (6) zu gleiten,
wobei die erste gekrümmte Gleitführung (R1) an jedem länglichen Ende (E1) des ersten Gleitbügels (B1) ein Federelement (12) aufweist, um den ersten Gleitbügel (B1) in eine Nennposition zu führen, wobei die zweite gekrümmte Gleitführung (R2) an jedem länglichen Ende (E2) des zweiten Gleitbügels (B2) ein Federelement (12) aufweist, um den zweiten Gleitbügel (B2) in eine Nennposition zu führen.

7. Plattform nach einem der Ansprüche 1 bis 6,
**dadurch gekennzeichnet, dass** jedes der mindestens zwei Regulierungssysteme (8) zwei Regulierungsvorrichtungen (13) aufweist, wobei die beiden Regulierungsvorrichtungen (13) an dem Rahmen (5), dem das Regulierungssystem (8) zugeordnet ist, beiderseits der Längsachse (A2) des Rahmens (5) in Höhe der Wiege (6) befestigt sind, wobei die beiden Regulierungsvorrichtungen (13) ebenfalls am rechteckigen Gestell (4) befestigt sind, wobei jede der beiden Regulierungsvorrichtungen (13) der mindestens zwei Regulierungssysteme (8) dazu konfiguriert ist, einen Abstand zwischen dem rechteckigen Gestell (4) und dem Rahmen (5) einzustellen.

8. Plattform nach einem der Ansprüche 1 bis 6,
**dadurch gekennzeichnet, dass** sie vier Ausrichtungsmasten (14) aufweist, die jeweils eine Spitze (15) umfassen, die zur Aufnahme einer Bezugspositionierungsvorrichtung (16) der Seitenschale des Luftfahrzeugs angeordnet ist, wobei ein Ausrichtungsmast (14) an jeder der vier Ecken (C1, C2, C3, C4) und senkrecht zum rechteckigen Gestell (4) befestigt ist.

9. Plattform nach einem der Ansprüche 1 bis 8,
**dadurch gekennzeichnet, dass** sie weiter mindestens zwei Trägermasten (17) aufweist, die jeweils eine Spitze (25) umfassen, die zur Aufnahme einer Positionierungsvorrichtung der Seitenschalen angeordnet ist, wobei jeder der beiden Trägermasten (17) senkrecht zum rechteckigen Gestell (4) zwischen zwei Ausrichtungsmasten (14) an einem Längsrand (LA1, LA2) des rechteckigen Gestells (4) befestigt ist.

10. Plattform nach Anspruch 8,
**dadurch gekennzeichnet, dass** jeder der mindestens zwei Trägermasten (17) ein der Spitze (25) gegenüberliegendes Ende (19) aufweist, das um eine zur Längsachse (A1) des rechteckigen Gestells (4) senkrechte Achse (A5) drehbar gelagert ist, so dass jeder der mindestens zwei Trägermasten (17) abwechselnd in einer eingezogenen Position, in der jeder der mindestens zwei Trägermasten (17) im Wesentlichen parallel zum rechteckigen Gestell (4) ist, und in einer ausgefahrenen Position, in der jeder der mindestens zwei Trägermasten (17) im Wesentlichen senkrecht zum rechteckigen Gestell (4) ist, vorliegt.

11. Plattform nach einem der Ansprüche 1 bis 9, **dadurch gekennzeichnet, dass** sie weiter eine Ausgleichsvorrichtung (9) der Montageplattform (1) umfasst, die dazu bestimmt ist, das rechteckige Gestell (4) im Wesentlichen horizontal zu halten, wobei die Ausgleichsvorrichtung (9) verstellbare Füße (18) umfasst, an denen das rechteckige Gestell (4) befestigt ist, wobei die verstellbaren Füße (18) in der Höhe vertikal verstellbar sind, wobei die verstellbaren Füße (18) dazu bestimmt sind, auf dem Boden aufgestellt zu werden, wobei die verstellbaren Füße (18) an den vier Ecken (C1, C2, C3, C4) des rechteckigen Gestells (4) angeordnet sind.

12. Plattform nach einem der Ansprüche 1 bis 11,
**dadurch gekennzeichnet, dass** das rechteckige Gestell (4) mindestens eine Aufnahme (23) umfasst, die dazu bestimmt ist, eine Handhabungsgabel parallel zum rechteckigen Gestell (4) aufzunehmen, um die Montageplattform (1) von einem Ort zu einem anderen zu bewegen.

## Claims

1. An assembly platform (1) intended for manipulating at least one lower shell (2) of an aircraft (AC) in order to assemble a fuselage barrel (3) of the aircraft (AC),
wherein it comprises at least:
- a rectangular chassis (4) having a longitudinal axis (A1) and four corners (C1, C2, C3, C4),
- at least two frames (5) having a longitudinal axis (A2), the at least two frames (5) having a trim that is adjustable with respect to the rectangular chassis (4),
- at least two setting systems (8) associated with a frame (5), the at least two setting systems (8) being intended to adjust the trim of the frame (5) with which it is associated with respect to the rectangular chassis (4),
- at least two cradles (6), each of the at least two cradles (6) being fixed onto a frame (5), the at least two cradles (6) having a generating line (D) parallel to the longitudinal axis (A2) of the frame (5) to which it is fixed, the at least two cradles (6) each having at least one reception surface (7) intended to receive the lower shell (2) and to hold the lower shell (2) in a desired form;
**characterized in that** each of the two frames (5) comprises an alignment arm (20) extending parallel to the longitudinal axis (A2) of each of the two frames (5), the alignment arm (20) of each of the two frames (5) comprising a free end (21) comprising a centering pin (22), the centering pin (22) of the alignment arm (20) being intended to receive a positioning element of the lower shell (2).

2. The platform as claimed in claim 1,
**characterized in that** the reception surface or surfaces (7) of each of the at least two cradles (6) comprise a plurality of rigid pads (10) intended to serve as bearing support for the lower shell (2) on each of the at least two cradles (6), the plurality of the rigid pads (10) being configured for the lower shell (2) to be held in the desired form when the lower shell (2) is pressed onto the plurality of the rigid pads (10).

3. The platform as claimed in either one of claims 1 and 2,
**characterized in that** the reception surface or surfaces (7) each comprise at least one fixing device (11) intended to fix the lower shell (2) to the two cradles (6).

4. The platform as claimed in claim 3,
**characterized in that** the fixing device or devices (11) of the reception surface or surfaces (7) each correspond to a sucker fixed onto the reception surface or surfaces (7).

5. The platform as claimed in either one of claims 1 to 4,
**characterized in that** each of the at least two cradles (6) comprises at least one first support structure (S1) comprising a first reception zone (Z1) for a first lateral side (L1) of a cradle (6) and at least one second support structure (S2) comprising a second reception zone (Z2) for a second lateral side (L2) of a cradle (6), the first reception zone (Z1) and the second reception zone (Z2) of each of the at least two cradles (6) forming a reception surface (7),
the first support structure or structures (S1) and the second support structure or structures (S2) of each of the at least two cradles (6) being mounted to rotate about a rotation axis (A3) parallel to the longitudinal axis (A2) of the frame (5),
each of the at least two cradles (6) comprising at least one first damping device (D1) each associated with a first support structure (S1) and at least one second damping device (D2) each associated with a second support structure (S2),
the first damping device or devices (D1) being configured to bring the associated first support structure or structures (S1) to a nominal position about the rotation axis (A3) parallel to the longitudinal axis (A2) of the frame (5) to which the cradle (6) is fixed, the second damping device or devices (D2) being configured to bring the associated second support structure or structures (S2) to a nominal position about the rotation axis (A3) parallel to the longitudinal axis (A2) of the frame (5) to which the cradle (6) is fixed.

6. The platform as claimed in claim 5,
**characterized in that** the first reception zone (Z1) of the first support structure or structures (S1) of each of the at least two cradles (6) comprises a first sliding half-ring (B1) and the second reception zone (Z2) of the second support structure or structures (S2) of each of the at least two cradles (6) comprises a second sliding half-ring (B2),
the first sliding half-ring (B1) having a first curved longitudinal axis (A41) between two longitudinal ends (E1) of the first sliding half-ring (B1), the first curved longitudinal axis (A41) being in accordance with the first reception zone (Z1), the second sliding half-ring (B2) having a second curved longitudinal axis (A42) between two longitudinal ends (E2) of the second sliding half-ring (B2), the second curved longitudinal axis (A42) being in accordance with the second reception zone (Z2),
the first sliding half-ring (B1) being configured to slide along the first curved longitudinal axis (A41) in a first curved slide (R1) of the first support structure or structures (S1) of each of the at least two cradles (6), the second sliding half-ring (B2) being configured to slide along the second curved longitudinal axis (A42) in a second curved slide (R2) of the second support structure or structures (S2) of each of the at least two cradles (6),
the first curved slide (R1) comprising a spring element (12) at each longitudinal end (E1) of the first sliding half-ring (B1) to bring the first sliding half-ring (B1) into a nominal position, the second curved slide (R2) comprising a spring element (12) at each longitudinal end (E2) of the second sliding half-ring (B2) to bring the second sliding half-ring (B2) into a nominal position.

7. The platform as claimed in any one of claims 1 to 6,
**characterized in that** each of the at least two setting systems (8) comprises two setting devices (13), the two setting devices (13) being fixed to the frame (5) with which the setting system (8) is associated on either side of the longitudinal axis (A2) of the frame (5) in line with the cradle (6), the two setting devices (13) being also fixed to the rectangular chassis (4), each of the two setting devices (13) of the at least two setting systems (8) being configured to adjust a distance between the rectangular chassis (4) and the frame (5).

8. The platform as claimed in any one of claims 1 to 6,
**characterized in that** it comprises four alignment posts (14) each comprising a top (15) arranged to receive a referential positioning device (16) of an aircraft side shell, an alignment post (14) being fixed at each of the four corners (C1, C2, C3, C4) and at right angles to the rectangular chassis (4).

9. The platform as claimed in any one of claims 1 to 8,
**characterized in that** it comprises at least two support posts (17) each comprising a top (25) arranged to receive a positioning device for the side shells, each of the two support posts (17) being fixed at right angles to the rectangular chassis (4) between two alignment posts (14) on a longitudinal edge (LA1, LA2) of the rectangular chassis (4).

10. The platform as claimed in claim 8,
**characterized in that** each of the at least two support posts (17) has an end (19) opposite the top (25) mounted to rotate about an axis (A5) at right angles to the longitudinal axis (A1) of the rectangular chassis (4) in such a way that each of the at least two support posts (17) alternately takes a retracted position in which each of the at least two support posts (17) is substantially parallel to the rectangular chassis (4) and a deployed position in which each of the at least two support posts (17) is substantially at right angles to the rectangular chassis (4).

11. The platform as claimed in any one of claims 1 to 9,
**characterized in that** it further comprises a balancing device (9) for the assembly platform (1) intended to hold the rectangular chassis (4) substantially horizontal, the balancing device (9) comprising adjustable feet (18) to which the rectangular chassis (4) is fixed, the adjustable feet (18) being adjustable vertically in height, the adjustable feet (18) being intended to be placed on the ground, the adjustable feet (18) being disposed at the four corners (C1, C2, C3, C4) of the rectangular chassis (4).

12. The platform as claimed in any one of claims 1 to 11,
**characterized in that** the rectangular chassis (4) comprises at least one housing (23) intended to receive a handling fork parallel to the rectangular chassis (4) in order to move the assembly platform (1) from one place to another.
